# EUROPÄISCHE PATENTANMELDUNG

(11) **EP 2 107 346 A1**
(43) Veröffentlichungstag der Anmeldung: **07.10.2009**
(21) Anmeldenummer: 09100140.4
(22) Anmeldetag: 23.02.2009
(51) Int. Cl.: G01F 1/05, G01F 1/74

(54) **Vorrichtung zur Erkennung von Luftblasen in einer fluiddurchströmten Heizeinrichtung sowie ein Verfahren für eine solche Vorrichtung**

(30) Priorität: 26.02.2008 DE 102008011117
(71) Anmelder: BSH Bosch und Siemens Hausgeräte GmbH, 81739 München (DE)
(72) Erfinder: Englisch, Christian, 83324 Ruhpolding (DE)

(57) **Zusammenfassung**

Die Erfindung betrifft eine Vorrichtung zur Erkennung von Luftblasen in einer fluiddurchströmten Heizeinrichtung (10) mit mindestens einem Heizelement (12), mit mindestens einem Durchflussmesser (14), welcher die Durchflussmenge des Fluids durch Pulssignale (16) erfasst, und mit mindestens einer Steuerschaltung (18), welche die Pulssignale (16) des mindestens einen Durchflussmessers (14) auswertet.

Es wird vorgeschlagen, dass die mindestens eine Steuerschaltung (18) dazu vorgesehen ist, die Pulssignale (16) des mindestens einen Durchflussmessers (14) auf zwei unterschiedliche Arten auszuwerten.

## Beschreibung

Die Erfindung betrifft eine Vorrichtung zur Erkennung von Luftblasen in einer fluiddurchströmten Heizeinrichtung sowie ein Verfahren für eine solche Vorrichtung nach den Oberbegriffen der unabhängigen Ansprüche.

In der Praxis sind fluiddurchströmte Heizeinrichtungen häufig als elektrische Durchlauferhitzer ausgeführt, welche entweder elektronisch oder hydraulisch gesteuert sind. Elektronisch gesteuerte Durchlauferhitzer sind gewöhnlich als Blankdrahtsysteme ausgeführt, d.h. die blanken Heizwendeln liegen unmittelbar im Wasser. Im Vergleich zu Rohrheizkörpern haben Blankdrahtsysteme kleine Wärmekapazitäten mit einer hohen Regeldynamik. Befinden sich größere Luftblasen in der Wasserströmung, so fehlt die notwendige Kühlung der Heizwendel und diese brennt innerhalb weniger Sekunden durch.

Üblicherweise wird der Volumenstrom in Durchlauferhitzern mit Messturbinen gemessen, die einen Pulssignalausgang haben. Die Anzahl der Pulssignale pro Zeiteinheit ist eine Funktion des Volumenstroms. Eine Steuereinheit zählt die Anzahl der Pulssignale pro Zeiteinheit und berechnet den Durchfluss.

Wenn Luftblasen in den Durchlauferhitzer eintreten, dann bildet der Übergang von Luft und Wasser keine scharfe Grenze. Es bildet sich vielmehr ein Luft-Wasser-Gemisch. Wenn dieses Luft-Wasser-Gemisch die Messturbine passiert, treten Beschleunigungs- und Bremsvorgänge sowie auch charakteristische kurzzeitige Unterbrechungen des Durchflusses auf.

Um Luftblasen zu detektieren sind bei elektronischen Durchlauferhitzern verschiedene Möglichkeiten bekannt. Bei dem üblichen Verfahren zur Bestimmung des Durchflusses werden die Anzahl der Pulssignale innerhalb eines Zeitfensters, beispielsweise 500 bis 1000 ms, gezählt und die Durchflussmenge berechnet. Durch dieses relativ lange Zeitfenster werden diese von den Luftblasen ausgelösten, sehr kurzen Unterbrechungen (100 bis 500 ms) des Durchflusses nicht zuverlässig erkannt. Wird das Zeitfenster kürzer gewählt, so werden zwar diese Unterbrechungen besser erkannt, aber die Messung des Durchflusses wird ungenauer, weil weniger Zählimpulse zur Verfügung stehen.

Die DE 43 03 325 A1 zeigt eine gattungsgemäße Vorrichtung zur Erkennung von Luftblasen in Blankdrahtheizkörpern, die in einer Wasserkammer eines Durchlauferhitzers angeordnet sind, wobei die Vorrichtung beim Auftreten von Luftblasen die Blankdrahtheizkörper abschaltet. Sowohl im Kaltwasserzulauf als auch im Warmwasserzulauf der Wasserkammer ist jeweils ein Durchflussmesser angeordnet, wobei die Durchflussmesser die jeweiligen momentanen Strömungsgeschwindigkeiten am Kaltwasserzulauf bzw. am Warmwasserablauf erfassen. Eine Steuerschaltung vergleicht die Messwerte der beiden Durchflussmesser miteinander und schaltet beim Auftreten einer Differenz die Heizkörper ab.

Die DE 197 25 977 A1 zeigt einen elektrischen Durchlauferhitzer mit einer zwischen einem Wasserzulauf und einem Wasseraustritt angeordneten Heizeinrichtung, die von einer Leistungselektronik angesteuert wird. Zwischen Wasserzulauf und Heizeinrichtung ist ein spezieller Durchflusssensor angeordnet, der ein Sensorsignal liefert, dessen Signalfrequenz vom Volumenstrom monoton abhängig ist. Die Frequenzcharakteristik des Sensorsignals wird von einer Überwachungsschaltung überwacht, wobei für das Auftreten von Luft oder Luft-Wasser-Gemischen in der Wasserzuleitung charakteristische Änderungen erfasst werden. Bei Erfassen der charakteristischen Signaländerungen wird von einer Generatorschaltung ein Abschaltsignal erzeugt, welches ein Abschalten der Heizeinrichtung bewirkt.

Der Erfindung liegt die Aufgabe zugrunde, eine zuverlässige und dennoch einfache Vorrichtung zum Erkennen von Luftblasen zu schaffen, welche kostengünstig in konventionelle Durchlauferhitzer integriert werden kann. Weiter soll ein Verfahren für eine solche Vorrichtung angegeben werden.

Diese Aufgabe wird erfindungsgemäß mit den Merkmalen der unabhängigen Ansprüche gelöst.

Bei einer erfindungsgemäßen Vorrichtung zur Erkennung von Luftblasen in einer fluiddurchströmten Heizeinrichtung ist die mindestens eine Steuerschaltung dazu vorgesehen, die Pulssignale des mindestens einen Durchflussmessers auf zwei unterschiedliche Arten auszuwerten. In vorteilhafter Weise ist hierdurch eine zuverlässige Erkennung von Luftblasen und eine genaue Messung der Durchflussmenge des Fluids in der Heizeinrichtung möglich. Bei einfachem und kostengünstigem Aufbau der Vorrichtung können daher normale Betriebszustände beim Zapfen zuverlässig von Luftblasen in der Heizeinrichtung unterschieden werden. Hierdurch ergibt sich eine Steigerung des Komforts für den Benutzer der Heizeinrichtung, da Luftblasen zuverlässig erkannt werden können, ohne dass sich die Heizeinrichtung bei normalen Betriebszuständen abschaltet.

Die Steuerschaltung ist vorteilhaft dazu vorgesehen, die Anzahl der Pulssignale des Durchflussmessers pro Zeiteinheit zu zählen und hieraus die Durchflussmenge des Fluids zu berechnen. Mit Hilfe der Steuerschaltung kann die Durchflussmenge einfach und zuverlässig berechnet werden.

Ferner ist die Steuerschaltung vorteilhaft dazu vorgesehen, die auf ein Zeitglied gegebenen Pulssignale des Durchflussmessers auszuwerten, wobei das Zeitglied bei jedem Pulssignal neu getriggert wird. Hierdurch findet eine ständige Überprüfung der Durchflusssignale des Durchflussmessers statt, so dass auch sehr kurze Unterbrechungen des Durchflusssignals bzw. der Durchflussmenge erkannt werden, wobei die Genauigkeit der Messung der Durchflussmenge erhalten bleibt.

In vorteilhafter Weise liefert das Zeitglied ein Ausgangssignal, sobald die Durchflussmenge des Fluids einen Mindestwert unterschreitet, wodurch Unterbrechungen der Durchflusssignale bzw. Luftblasen zuverlässig erkannt werden.

Günstigerweise ist die Steuerschaltung dazu vorgesehen, die Pulssignale des Durchflussmessers und die Ausgangssignale des Zeitglieds zu vergleichen. In vorteilhafter Weise kann hierdurch sehr einfach ein Rückschluss darauf gezogen werden, ob es sich um einen normalen Betriebszustand bzw. Zapfvorgang oder eine Luftblase handelt.

In einer vorteilhaften Weiterbildung weist die Vorrichtung eine Schutzvorrichtung zum Schutz der Heizeinrichtung vor Überhitzung auf, so dass bei fehlender Kühlung des Heizelementes der Heizeinrichtung aufgrund von Luftblasen, bevorzugt die Heizleistung so lange abgeschaltet wird, bis die Heizeinrichtung wieder vollständig mit Fluid gefüllt ist.

Vorteilhaft ist der Schutzvorrichtung als Eingangsgröße das Ausgangssignal des Zeitgliedes zuführbar, wodurch ein sofortiges Abschalten des Heizelementes beim Erkennen von Luftblasen möglich ist.

Günstigerweise ist das Zeitglied durch einen Microcontroller gebildet, welcher in der Regel ohnehin zur Steuerung einer fluiddurchströmten Heizeinrichtung erforderlich ist, wodurch ein zusätzliches Bauteil kostenersparend entfallen kann.

Anhand eines in der Zeichnung dargestellten Ausführungsbeispiels wird die Erfindung nachfolgend näher beschrieben. Es zeigt:
- Fig. 1: ein Blockschaltbild eines Ausführungsbeispiels der erfindungsgemäßen Vorrichtung zur Erkennung von Luftblasen in einer fluiddurchströmten Heizeinrichtung, und
- Fig.2: typische Signalverläufe der Pulssignale des Durchflussmessers der erfindungsgemäßen Vorrichtung gemäß Fig. 1.

In den Figuren werden gleiche oder im Wesentlichen gleich bleibende Elemente mit den gleichen Bezugszeichen versehen.

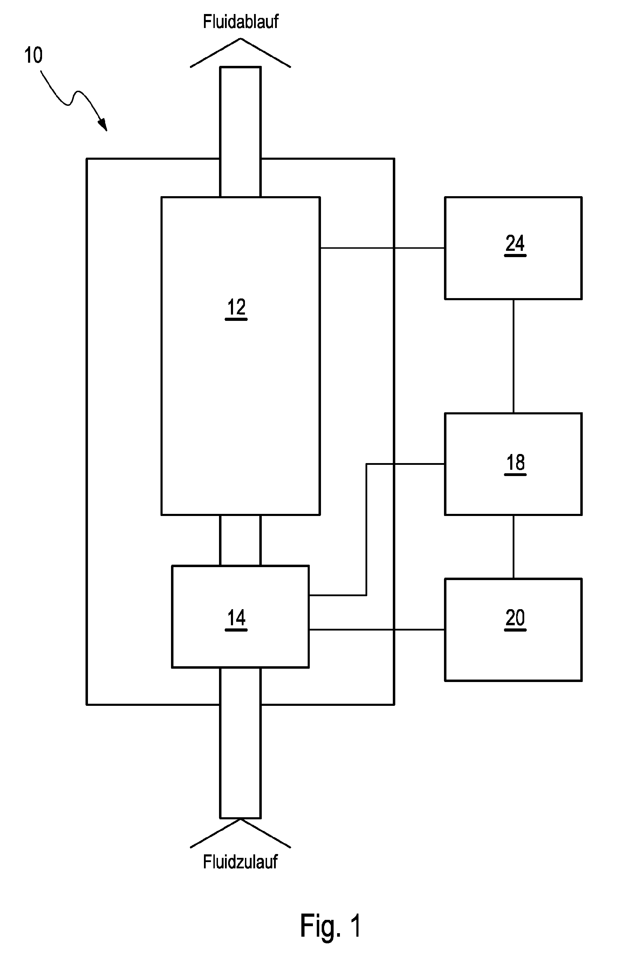

Zur Erläuterung der Erfindung zeigt Fig. 1 in einem Blockschaltbild eine bevorzugte Ausgestaltung einer Vorrichtung zur Erkennung von Luftblasen in einer fluiddurchströmten Heizeinrichtung 10 mit mindestens einem Heizelement 12, mindestens einem Durchflussmesser 14, welcher die Durchflussmenge des Fluids durch Pulssignale 16 erfasst, und mit mindestens einer Steuerschaltung 18, welche die Pulssignale 16 des mindestens einen Durchflussmessers 14 auswertet.

Im vorliegenden Ausführungsbeispiel ist der Durchflussmesser 14 als Messturbine ausgebildet, die einen Pulsausgang aufweist. Die Messturbine ist in der Regel als in der Fluidströmung liegender Rotationskörper ausgebildet, der entsprechend der jeweiligen Fluidströmung rotiert. Die Messturbine dient zur Messung des Volumenstromes bzw. der Durchflussmenge des durch die Heizeinrichtung 10 strömenden Fluids, wobei die Anzahl der Pulse pro Zeiteinheit eine Funktion des Volumenstromes ist.

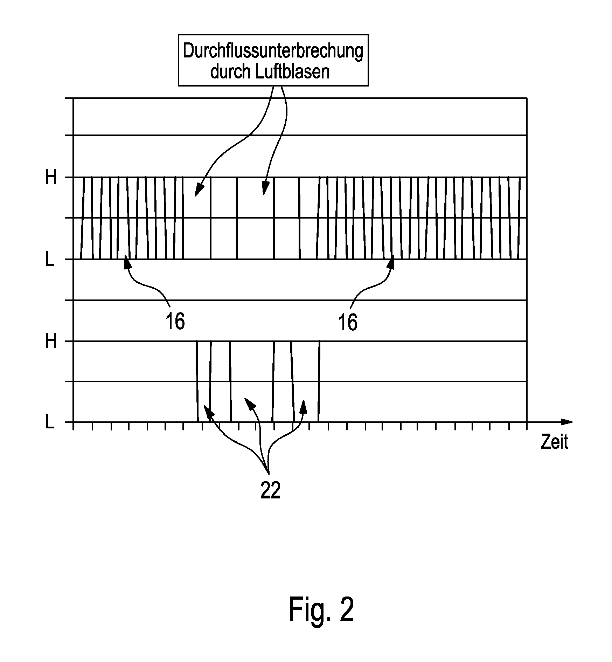

Um Luftblasen in der fluiddurchströmten Heizeinrichtung 10 zuverlässig zu erkennen, wird erfindungsgemäß vorgeschlagen, dass die Steuerschaltung 18 dazu vorgesehen ist, die Pulssignale 16 des mindestens einen Durchflussmessers 14 auf zwei unterschiedliche Arten auszuwerten. Wie Fig. 2 zeigt, werden die Pulssignale 16 des Durchflussmessers 14 einerseits als Durchflusssignale zur Bestimmung der Durchflussmenge ausgewertet und andererseits auf ein Zeitglied 20 gegeben, das bei jedem Pulssignal 16 neu getriggert wird. D.h. zum einen ist die Steuerschaltung 18 dazu vorgesehen, die Anzahl der Pulssignale 16 des Durchflussmessers 14 pro Zeiteinheit zu zählen und hieraus die Durchflussmenge des Fluids zu berechnen und zum anderen ist die Steuerschaltung 18 dazu vorgesehen, die auf ein Zeitglied 20 gegebenen Pulssignale 16 des Durchflussmessers 14 auszuwerten, wobei das Zeitglied 20 bei jedem Pulssignal 16 neu getriggert wird.

Im vorliegenden Ausführungsbeispiel ist das Zeitglied 20 durch einen Microcontroller gebildet. Das Zeitglied 20 liefert bei Unterschreiten eines Mindestwertes der Durchflussmenge des Fluids und/oder bei fehlenden Durchflusssignalen 16 des Durchflussmessers 14 ein Ausgangssignal 22, d.h. die fehlenden Durchflussimpulse des Durchflussmessers 14 führen zu einem Schalten des Zeitgliedes 20.

Zum Schutz des Heizelementes 12 vor Überhitzung weist die Vorrichtung eine Schutzvorrichtung 24 auf, welcher als Eingangsgröße das Ausgangssignal 22 des Zeitgliedes 20 zuführbar ist. D.h. das von dem Zeitglied 20 bei Unterschreiten eines Mindestwertes der Durchflussmenge des Fluids und/oder bei fehlenden Durchflusssignalen 16 des Durchflussmessers 14 gelieferte Ausgangssignal 22 wird der Schutzvorrichtung 24 zugeführt, welches das Heizelement 12 zum Schutz vor Überhitzung ausschaltet.

Die Steuerschaltung 18 ist dazu vorgesehen, die Pulssignale 16 pro Zeiteinheit bzw. die Durchflusssignale 16 des Durchflussmessers 14 und die Ausgangssignale 22 des Zeitglieds 20 miteinander zu vergleichen. Dies bedeutet, dass mindestens ein Durchflusssignal 16 des Durchflussmessers mit mindestens einem Ausgangssignal 22 des Zeitgliedes 20 verglichen wird, wodurch eine konstante Durchflussmenge des Fluids oder eine Unterbrechung der Durchflussmenge durch mindestens eine Luftblase erkennbar ist. Es kann daher ein Rückschluss gezogen werden, ob dies ein normaler Zapfvorgang oder eine Luftblase in der Heizeinrichtung 10 war.

### Bezugszeichenliste

- 10: fluiddurchströmte Heizeinrichtung
- 12: Heizelement
- 14: Durchflussmesser
- 16: Pulssignal
- 18: Steuerschaltung
- 20: Zeitglied
- 22: Ausgangssignal
- 24: Schutzvorrichtung

## Patentansprüche

1. Vorrichtung zur Erkennung von Luftblasen in einer fluiddurchströmten Heizeinrichtung (10) mit mindestens einem Heizelement (12), mit mindestens einem Durchflussmesser (14), welcher die Durchflussmenge des Fluids durch Pulssignale (16) erfasst, und mit mindestens einer Steuerschaltung (18), welche die Pulssignale (16) des mindestens einen Durchflussmessers (14) auswertet, **dadurch gekennzeichnet, dass** die mindestens eine Steuerschaltung (18) dazu vorgesehen ist, die Pulssignale (16) des mindestens einen Durchflussmessers (14) auf zwei unterschiedliche Arten auszuwerten.

2. Vorrichtung nach Anspruch 1, **dadurch gekennzeichnet, dass** die Steuerschaltung (18) dazu vorgesehen ist, die Anzahl der Pulssignale (16) des Durchflussmessers (14) pro Zeiteinheit zu zählen und hieraus die Durchflussmenge des Fluids zu berechnen.

3. Vorrichtung nach Anspruch 1 oder 2, **dadurch gekennzeichnet, dass** die Steuerschaltung (18) dazu vorgesehen ist, die auf ein Zeitglied (20) gegebenen Pulssignale (16) des Durchflussmessers (14) auszuwerten, wobei das Zeitglied (20) bei jedem Pulssignal (16) neu getriggert wird.

4. Vorrichtung nach Anspruch 3, **dadurch gekennzeichnet, dass** das Zeitglied (20) ein Ausgangssignal (22) liefert, sobald die Durchflussmenge des Fluids einen Mindestwert unterschreitet.

5. Vorrichtung nach einem der vorhergehenden Ansprüche, **dadurch gekennzeichnet, dass** die Steuerschaltung (18) dazu vorgesehen ist, die Pulssignale (16) des Durchflussmessers (14) und die Ausgangssignale (22) des Zeitglieds (20) zu vergleichen.

6. Vorrichtung nach einem der vorhergehenden Ansprüche, **gekennzeichnet durch** eine Schutzvorrichtung (24) zum Schutz des Heizelementes (12) vor Überhitzung.

7. Vorrichtung nach Anspruch 6, **dadurch gekennzeichnet, dass** der Schutzvorrichtung (24) als Eingangsgröße das Ausgangssignal (22) des Zeitgliedes (20) zuführbar ist.

8. Vorrichtung nach einem der Ansprüche 3 bis 7, **dadurch gekennzeichnet, dass** das Zeitglied (20) durch einen Microcontroller gebildet wird.

9. Verfahren zur Erkennung von Luftblasen in einer fluiddurchströmten Heizeinrichtung mit einer Vorrichtung nach den Ansprüchen 1 bis 9, die mindestens ein Heizelement (12), mindestens einen Durchflussmesser (14), welcher die Durchflussmenge des Fluids durch Pulssignale (16) erfasst, und mindestens eine Steuerschaltung (18), welche die Pulssignale (16) des mindestens einen Durchflussmessers (14) auswertet, aufweist, **dadurch gekennzeichnet, dass** die Pulssignale (16) des mindestens einen Durchflussmessers (14) von der mindestens einen Steuerschaltung (18) auf zwei unterschiedliche Arten ausgewertet werden.

10. Verfahren nach Anspruch 9, **dadurch gekennzeichnet, dass** die Pulssignale (16) des Durchflussmessers (14) als Durchflusssignale einerseits zur Bestimmung der Durchflussmenge ausgewertet und andererseits auf ein Zeitglied (20) gegeben werden, das bei jedem Pulssignal (16) neu getriggert wird.

11. Verfahren nach Anspruch 9 oder 10, **dadurch gekennzeichnet, dass** das Zeitglied (20) bei Unterschreiten eines Mindestwertes der Durchflussmenge des Fluids und/oder bei fehlenden Durchflusssignalen (16) des Durchflussmessers (14) ein Ausgangssignal (22) liefert.

12. Verfahren nach Anspruch 11, **dadurch gekennzeichnet, dass** das Ausgangssignal (22) einer Schutzvorrichtung (24) zugeführt wird, welches das Heizelement (12) zum Schutz vor Überhitzung ausschaltet.

13. Verfahren nach einem der Ansprüche 9 bis 12, **dadurch gekennzeichnet, dass** mindestens ein Durchflusssignal (16) des Durchflussmessers (14) mit mindestens einem Ausgangssignal (22) des Zeitgliedes (20) verglichen wird, wodurch eine konstante Durchflussmenge des Fluids oder eine Unterbrechung der Durchflussmenge durch mindestens eine Luftblase erkennbar ist.
